# EUROPEAN PATENT APPLICATION

(11) **EP 4 382 294 A1**
(43) Date of publication of application: **12.06.2024**
(21) Application number: 22852680.2
(22) Date of filing: 14.06.2022
(51) Int. Cl.: B32B 27/34, B29C 55/02, C08G 69/26, C08J 3/22, C08J 5/18

(54) **MULTILAYER FILM AND METHOD FOR PRODUCING MULTILAYER FILM**

(30) Priority: 02.08.2021 JP 2021126738
(71) Applicant: MITSUBISHI GAS CHEMICAL COMPANY, INC., Chiyoda-ku Tokyo 100-8324 (JP)
(72) Inventor: SHIMADA NAKAMURA Jin, Hiratsuka-shi, Kanagawa 254-0016 (JP); ODA Takafumi, Hiratsuka-shi, Kanagawa 254-0016 (JP)
(74) Representative: Vossius & Partner Patentanwälte Rechtsanwälte mbB
(86) International application number: PCT/JP2022/023831
(87) International publication number: WO 2023/013253

(57) **Abstract**

Provided are a multilayer film including: a layer formed from a resin composition containing a polyamide resin and carbon nanotubes; and at least another layer, the multilayer film having antistatic properties, visibility, and stretchability, and a method for producing the multilayer film. The multilayer film includes: a layer formed from a resin composition containing a polyamide resin and single-walled carbon nanotubes; and at least another layer.

## Description

### Technical Field

The present invention relates to a multilayer film and a method for producing a multilayer film.

### Background Art

Polyamide resins have been developed for various applications, taking advantage of their excellent heat resistance and mechanical properties.

Blending carbon nanotubes (CNTs) into polyamide resins has been studied for various purposes. For example, Patent Document 1 describes that a carbon-based nanofiller such as CNT is blended into a polyamide resin in order to increase a crystallization rate of the polyamide resin. Patent Document 2 describes that CNT is blended into an aromatic polyamide film in order to enhance rigidity and dimensional stability.

### Citation List

### Patent Documents

Patent Document 1: WO 2014/199045
Patent Document 2: JP 2003-138040 A

### Summary of Invention

### Technical Problem

Meanwhile, examples of applications in which a polyamide resin is used include a stretched multilayer film including a polyamide resin layer and another layer. When the polyamide resin layer is stretched, oxygen barrier properties are improved. Therefore, such a stretched multilayer film is used in applications requiring the oxygen barrier properties. An example of the stretched multilayer film is a multilayer film including a polyamide resin layer and a polyolefin layer. Such a multilayer film is also excellent in visibility, and thus is preferably used in packaging materials and the like in which contents can be checked from the outside.

In recent years, there are cases where antistatic properties are desired in such a multilayer film having a polyamide resin layer and another layer. As one of the means for imparting antistatic properties to a multilayer film, blending carbon nanotubes (CNTs) into a polyamide resin layer is a possibility. However, as a result of studies, the present inventor has found that blending CNTs into a polyamide resin layer may make stretching difficult or deteriorate its visibility.

An object of the present invention is to solve such issues, and to provide a multilayer film including: a layer formed from a resin composition containing a polyamide resin and carbon nanotubes; and at least another layer, the multilayer film having antistatic properties, visibility, and stretchability, and a method for producing the multilayer film.

### Solution to Problem

As a result of studies to solve the above issues, the present inventor has found that the issues can be solved by using single-walled carbon nanotubes (SWCNTs) as CNTs.

Specifically, the issues described above are solved by the following solutions.
<1> A multilayer film including: a layer formed from a resin composition containing a polyamide resin and single-walled carbon nanotubes; and at least another layer.
<2> The multilayer film according to <1>, in which the polyamide resin includes a semi-aromatic polyamide resin.
<3> The multilayer film according to <1>, in which the polyamide resin contains a diamine-derived structural unit and a dicarboxylic acid-derived structural unit, and 70 mol% or more of the diamine-derived structural unit is derived from a xylylenediamine.
<4> The multilayer film according to <3>, in which 70 mol% or more of the dicarboxylic acid-derived structural unit is derived from an α,ω-linear aliphatic dicarboxylic acid having from 4 to 9 carbon atoms.
<5> The multilayer film according to <3> or <4>, in which 70 mol% or more of the xylylenediamine is metaxylylenediamine.
<6> The multilayer film according to any one of <1> to <5>, in which a single-walled carbon nanotube content in the resin composition is 0.05 mass% or more and less than 1.0 mass%.
<7> The multilayer film according to any one of <1> to <5>, in which the single-walled carbon nanotube content in the resin composition is 0.05 mass% or more and 0.7 mass% or less.
<8> The multilayer film according to any one of <1> to <7>, in which the single-walled carbon nanotubes are derived from master-batched single-walled carbon nanotubes.
<9> The multilayer film according to any one of <1> to <7>, in which the resin composition includes a resin composition obtained by adding single-walled carbon nanotubes when synthesizing a polyamide resin.
<10> The multilayer film according to any one of <1> to <9>, in which a total light transmittance of the multilayer film is more than 40%.
<11> The multilayer film according to any one of <1> to <10>, in which the other layer includes a polyolefin layer.
<12> The multilayer film according to <11>, in which the other layer includes an adhesive layer, and the multilayer film includes the polyolefin layer, the adhesive layer, and the layer formed from the resin composition in this order.
<13> The multilayer film according to any one of <1> to <12>, which is a stretched film.
<14> A method for producing the multilayer film described in any one of <1> to <8> and <10> to <13>, the method including:
   melt-kneading a polyamide resin and master-batched single-walled carbon nanotubes, in which a single-walled carbon nanotube content is 0.05 mass% or more and less than 1.0 mass% in the resin composition.
<15> A method for producing the multilayer film described in any one of <1> to <7> and <9> to <13>, the method including:
   adding single-walled carbon nanotubes during synthesis of the polyamide resin.

### Advantageous Effects of Invention

The present invention has enabled to provide a multilayer film including: a layer formed from a resin composition containing a polyamide resin and carbon nanotubes; and at least another layer, the multilayer film having antistatic properties, visibility, and stretchability, and a method for producing the multilayer film.

### Brief Description of Drawings

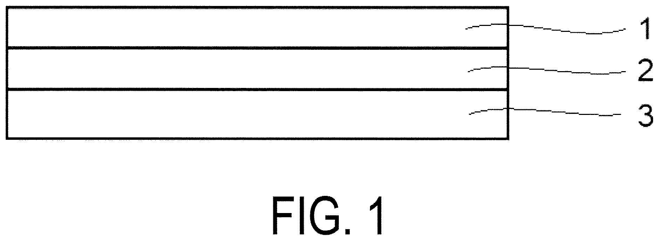

FIG. 1 is a cross-sectional schematic view illustrating an example of a multilayer film according to the present invention.

### Description of Embodiments

Hereinafter, embodiments for conducting the present invention (referred to simply as "the present embodiments" below) will be described in detail. Note that the following embodiments are examples for describing the present invention, and the present invention is not limited to these embodiments.

In the present specification, "from ... to ..." or "of ... to ..." is used to mean that the numerical values described before and after "to" are included as the lower limit and the upper limit, respectively.

In the present specification, various physical property values and characteristic values are values at 23°C unless otherwise noted.

When a measurement method or the like of a standard set forth in the present specification differs depending on the year, it is based on the standard as of January 1, 2021, unless otherwise stated.

In the present specification, a single-walled carbon nanotube is referred to as SWCNT, a multi-walled carbon nanotube is referred to as MWCNT, and a carbon nanotube is referred to as CNT, in some cases.

The multilayer film of the present embodiments includes: a layer formed from a resin composition containing a polyamide resin and SWCNTs; and at least another layer. With such a configuration, a multilayer film having antistatic properties, visibility, and stretchability can be obtained.

CNTs have been blended into a polyamide resin to achieve various purposes. For CNTs, MWCNTs have been blended. However, as a result of studies, the present inventor has found that, when MWCNTs are used as CNTs in a multilayer film including: a layer formed from a resin composition containing a polyamide resin and CNTs; and at least another layer, antistatic properties and visibility tend to be impaired, causing stretching to be more difficult. Meanwhile, it has been presumed that aggregation of CNTs can be effectively suppressed by using SWCNTs as the CNTs. Furthermore, it has been presumed that the suppression of aggregation of CNTs could achieve sufficient antistatic properties even when an amount of the CNTs to be blended was relatively reduced with respect to the amount of the polyamide resin, and as a result, visibility was also presumed to be secured. In addition, it has been presumed that the aggregation of CNTs was likely to result in breakage of the film during the stretching process with aggregates serving as starting points, but in the present embodiments, the CNTs were allowed to be less likely to aggregate, and thus a film also excellent in stretchability was obtained.

The multilayer film of the present embodiments has a layer formed from a resin composition containing a polyamide resin and SWCNTs (hereinafter sometimes referred to as "conductive layer"). Due to the presence of such a conductive layer, a conductive layer having excellent antistatic properties and excellent visibility can be obtained. Furthermore, SWCNTs are less likely to aggregate, and thus are less likely to serve as a breaking starting point during stretching, and thus a multilayer film having excellent stretchability can be obtained.

Oxygen barrier properties of the conductive layer can be further improved. This is presumably because the SWCNTs are sufficiently dispersed in the conductive layer (in the polyamide resin), but oxygen does not pass through a region where CNTs are present, and thus a region through which oxygen can pass in the conductive layer is relatively reduced. In addition, it is presumed that, since CNTs are present in a dispersed manner, oxygen circuitously passes through a region (polyamide resin region) in which CNTs are not contained, and thus it takes time for oxygen to pass through the conductive layer.

As described above, in the present embodiments, the conductive layer is formed from a resin composition containing a polyamide resin and SWCNTs.

The resin composition contains a polyamide resin. The polyamide resin used in the present embodiments is not particularly limited in terms of its type and the like, and may be an aliphatic polyamide resin or a semi-aromatic polyamide resin.

Examples of the aliphatic polyamide resin include polyamide 6, polyamide 11, polyamide 12, polyamide 46, polyamide 66, polyamide 666, polyamide 610, and polyamide 612. Polyamide 6 and polyamide 66 are preferable, and polyamide 6 is more preferable.

The polyamide resin used in the present embodiments preferably includes a semi-aromatic polyamide resin. For example, 90 mass% or more of the polyamide resin contained in the resin composition is more preferably a semi-aromatic polyamide resin. The semi-aromatic polyamide resin refers to a polyamide resin composed of diamine-derived structural units and dicarboxylic acid-derived structural units, in which from 20 to 80 mol% (preferably from 30 to 70 mol%, and more preferably from 40 to 60 mol%) of the total structural units of the diamine-derived structural units and the dicarboxylic acid-derived structural units are structural units containing an aromatic ring. Using such a semi-aromatic polyamide resin can enhance the mechanical strength of the obtained multilayer film. Examples of the semi-aromatic polyamide resin include terephthalic acid-based polyamide resins (polyamide 6T, polyamide 9T, and polyamide 10T) and xylylenediamine-based polyamide resins which will be described later.

The polyamide resin may be crystalline or amorphous, but, in the present embodiments, using a crystalline polyamide resin is also preferable because sufficient visibility can be secured.

In addition to the above, for the polyamide resin, reference can be made to the descriptions in paragraphs [0011] to [0013] of JP 2011-132550 A, the contents of which are incorporated in the present specification.

The polyamide resin used in the present embodiments preferably includes at least one polyamide resin containing diamine-derived structural units and dicarboxylic acid-derived structural units, in which 70 mol% or more of the diamine-derived structural units are derived from xylylenediamine (preferably metaxylylenediamine). Hereinafter, such a polyamide resin is sometimes referred to as xylylenediamine-based polyamide resin. Using the xylylenediamine-based polyamide resin can provide a multilayer film having more excellent oxygen barrier properties.

In the xylylenediamine-based polyamide resin, more preferably 75 mol% or more, still more preferably 80 mol% or more, even more preferably 85 mol% or more, even still more preferably 90 mol% or more, and yet even still more preferably 95 mol% or more of the diamine-derived structural units are derived from an xylylenediamine (preferably metaxylylenediamine).

Examples of diamines besides xylylenediamine that can be used as raw material diamine components of the xylylenediamine-based polyamide resin include aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having aromatic ring(s), such as bis(4-aminophenyl)ether, p-phenylenediamine, and bis(aminomethyl)naphthalene. One type thereof can be used, or two or more types thereof can be mixed and used.

Meanwhile, the dicarboxylic acid-derived structural units in the xylylenediamine-based polyamide resin are not particularly limited, and include a structural unit derived from any one or more of an aliphatic dicarboxylic acid, an alicyclic dicarboxylic acid, and an aromatic dicarboxylic acid, preferably include at least a structural unit derived from an aliphatic dicarboxylic acid, more preferably include a structural unit derived from an α,ω-linear aliphatic dicarboxylic acid having from 4 to 20 carbon atoms, and still more preferably include a structural unit derived from an α,ω-linear aliphatic dicarboxylic acid having from 4 to 9 carbon atoms. In the xylylenediamine-based polyamide resin, preferably 70 mol% or more, more preferably 75 mol% or more, still more preferably 80 mol% or more, even more preferably 90 mol% or more, and even still more preferably 95 mol% or more of the dicarboxylic acid-derived structural units are derived from an α,ω-linear aliphatic dicarboxylic acid having from 4 to 20 carbon atoms (preferably an α,ω-linear aliphatic dicarboxylic acid having from 4 to 9 carbon atoms).

Examples of the α,ω-linear aliphatic dicarboxylic acid having from 4 to 20 carbon atoms that is preferably used as the raw material dicarboxylic acid component of the xylylenediamine-based polyamide resin include aliphatic dicarboxylic acids, such as succinic acid, glutaric acid, pimelic acid, suberic acid, azelaic acid, adipic acid, sebacic acid, undecanedioic acid, and dodecanedioic acid. Among these, one type, or a mixture of two or more types may be used, but adipic acid or sebacic acid is more preferable, and adipic acid is more preferable because a melting point of the polyamide resin is in an appropriate range for molding.

Examples of the dicarboxylic acid component other than the α,ω-linear aliphatic dicarboxylic acid having from 4 to 20 carbon atoms include phthalic acid compounds, such as isophthalic acid, terephthalic acid, and orthophthalic acid; and naphthalenedicarboxylic acid isomers, such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One type, or a mixture of two or more types may be used.

The xylylenediamine-based polyamide resin in the present embodiments is preferably a polyamide resin in which from 0 to 100 mol% of the diamine-derived structural units are derived from paraxylylenediamine, from 100 to 0 mol% thereof are derived from metaxylylenediamine, and 70 mol% or more (preferably 80 mol% or more, and more preferably 90 mol% or more) of the dicarboxylic acid-derived structural unit are derived from sebacic acid and/or adipic acid (preferably adipic acid).

A more preferred embodiment A of the xylylenediamine-based polyamide resin is, for example, a polyamide resin in which 70 mol% or more (preferably 80 mol% or more, more preferably 90 mol% or more, and still more preferably 95 mol% or more) of the diamine-derived structural units are derived from paraxylylenediamine, and 70 mol% or more (preferably 80 mol% or more, and more preferably 90 mol% or more) of the dicarboxylic acid-derived structural units are derived from sebacic acid.

A more preferred embodiment B of the xylylenediamine-based polyamide resin is a polyamide resin in which from 30 to 90 mol% (preferably from 60 to 80 mol%) of the diamine-derived structural units are derived from metaxylylenediamine, from 70 to 10 mol% (preferably from 40 to 20 mol%) thereof are derived from paraxylylenediamine, and 70 mol% or more (preferably 80 mol% or more, and more preferably 90 mol% or more) of the dicarboxylic acid-derived structural units are derived from sebacic acid.

A more preferred embodiment C of the xylylenediamine-based polyamide resin is, for example, a polyamide resin in which 70 mol% or more (preferably 80 mol% or more, more preferably 90 mol% or more, and still more preferably 95 mol% or more) of the diamine-derived structural units are derived from metaxylylenediamine, and 70 mol% or more (preferably 80 mol% or more, and more preferably 90 mol% or more) of the dicarboxylic acid-derived structural units are derived from adipic acid.

In the resin composition, Embodiment C is particularly preferred.

In any of the embodiments described above, a total of the diamine-derived structural units does not exceed 100 mol%, and a total of the dicarboxylic acid-derived structural units also does not exceed 100 mol%.

In the present embodiments, the semi-aromatic polyamide resin (preferably xylylenediamine-based polyamide resin) contains diamine-derived structural units and dicarboxylic acid-derived structural units as main components, but does not entirely exclude structural units other than these. Of course, the polyamide resin may contain a structural unit derived from a lactam such as ε-caprolactam or laurolactam, or from an aliphatic aminocarboxylic acid such as aminocaproic acid or aminoundecanoic acid. Here, the term "main component" indicates that, of the structural units constituting the semi-aromatic polyamide resin, a total number of the diamine-derived structural units and the dicarboxylic acid-derived structural units is the largest among all the structural units. In the present embodiments, a total of the diamine-derived structural units and the dicarboxylic acid-derived structural units in the semi-aromatic polyamide resin preferably accounts for 90% or more, more preferably 95% or more, and still more preferably 98% or more, of all the structural units.

The melting point of the polyamide resin is preferably from 150 to 350°C, more preferably from 180 to 330°C, and still more preferably from 200 to 300°C.

The melting point can be measured, according to differential scanning calorie, in accordance with JIS K7121 and K7122.

A lower limit of the number average molecular weight (Mn) of the polyamide resin is preferably 6000 or more, more preferably 8000 or more, still more preferably 10000 or more, even more preferably 15000 or more, even still more preferably 20000 or more, and yet even still more preferably 22000 or more. An upper limit of the above Mn is preferably 35000 or less, more preferably 30000 or less, still more preferably 28000 or less, and even more preferably 26000 or less. The polyamide with a number average molecular weight in such a range provides better thermal resistance, elastic modulus, dimensional stability, and molding processability.

A lower limit of a relative viscosity of the polyamide resin in the present embodiments is preferably 1.9 or more, more preferably 2.0 or more, and still more preferably 2.1 or more. Meanwhile, an upper limit of the relative viscosity of the polyamide resin is preferably 4.0 or less, more preferably 3.9 or less, and still more preferably 3.8 or less.

The relative viscosity of the polyamide resin is measured in accordance with the conditions of JIS K 69020-2.

A content of the polyamide resin in the resin composition is preferably 80.0 mass% or more, more preferably 90.0 mass% or more, still more preferably 95.0 mass% or more, and even more preferably 98.0 mass% or more. When the proportion is set to the lower limit value or more, the oxygen barrier properties tend to be further improved. The content of the polyamide resin in the resin composition is preferably an amount such that all components other than the SWCNTs are the polyamide resin.

The resin composition may contain only one type, or two or more types of polyamide resins. When two or more types are contained, the total amount thereof is preferably in the above range.

Next, a single-walled carbon nanotube (SWCNT) will be described.

The resin composition contains SWCNTs. Using SWCNT makes it possible to give antistatic properties while ensuring visibility of a layer formed from a resin composition containing a polyamide resin and SWCNT. In addition, the oxygen barrier properties of the conductive layer can also be improved.

SWCNTs are, for example, seamless cylindrical substances formed from single-layer graphene, and are distinguished from MWCNTs in which a plurality of tubes of rolled graphene are concentrically stacked.

Examples of SWCNTs include zigzag-type SWCNTs, armchair-type SWCNTs, and chiral-type SWCNTs, and any type may be used.

The SWCNTs used in the present embodiments are available as commercial products, and examples thereof include SWCNTs available from Zeon Corporation and OCSiAl. The CNT sometimes referred to as a graphite fibril, a carbon fibril, or the like in addition to the name "carbon nanotube".

The carbon nanotubes have a diameter (number average fiber diameter) of preferably from 0.5 to 30 nm, and more preferably from 1 to 10 nm. An aspect ratio is preferably from 300 to 5000, more preferably from 1000 to 5000, and still more preferably from 2000 to 5000.

In the present embodiments, SWCNTs are preferably derived from master-batched single-walled carbon nanotubes. Using master-batched SWCNTs can effectively suppress aggregation of the CNTs in the obtained conductive layer. As a result, it is possible to effectively suppress the film from being broken from aggregates as starting points during the stretching process. For details of master-batching, reference can be made to the matters described in the part regarding the method for producing the multilayer film of the present embodiment.

A content of the SWCNTs in the resin composition (conductive layer) is preferably 0.05 mass% or more, more preferably 0.10 mass% or more, and still more preferably 0.15 mass% or more. When the content is not less than the lower limit, the antistatic properties can be sufficiently achieved, and the oxygen barrier properties can be further improved. Further, from the perspective of remarkably improving the oxygen barrier properties, the content is still more preferably 0.25 mass% or more. In addition, the content of the SWCNTs in the resin composition (conductive layer) is preferably 1.0 mass% or less, more preferably 0.7 mass% or less, still more preferably 0.6 mass% or less, even more preferably 0.45 mass% or less, and even still more preferably 0.4 mass% or less. When the content is not more than the upper limit, the stretchability and the oxygen barrier properties tend to further improve. In particular, even in a case where the same amount of CNTs are blended, the visibility and the stretchability can be improved more when SWCNTs are used than when MWCNTs are used. Further, from the perspective of remarkably improving the visibility, the content is even more preferably 0.25 mass% or less.

In addition, the content of the SWCNTs in the resin composition (conductive layer) is, per 100 parts by mass of the resin composition, preferably 0.05 parts by mass or more, more preferably 0.10 parts by mass or more, and still more preferably 0.15 parts by mass or more, and, from the perspective of remarkably improving the oxygen barrier properties, is even more preferably 0.25 parts by mass or more. Furthermore, the content of the SWCNTs in the resin composition (conductive layer) is, per 100 parts by mass of the resin composition, preferably 1.0 parts by mass or less, more preferably 0.7 parts by mass or less, still more preferably 0.6 parts by mass or less, even more preferably 0.45 parts by mass or less, and even still more preferably 0.4 parts by mass or less, and, from the perspective of remarkably improving the visibility, is yet even still more preferably 0.25 parts by mass or less.

The resin composition (conductive layer) of the present embodiments may contain only one type, or two or more types of SWCNTs. When two or more types are contained, the total amount thereof is preferably in the above range.

The resin composition is preferably substantially free of conductive substances other than SWCNTs. With such a configuration, stretchability can be further enhanced. Further, using a general conductive substance such as carbon black deteriorates the visibility, but, in the present embodiments, such an issue is avoided by using SWCNTs. The phrase "substantially free of conductive substances other than SWCNTs" means that, for example, the content of a conductive substance other than SWCNTs in the resin composition (conductive layer) is 10 mass% or less, preferably 5 mass% or less, more preferably 3 mass% or less, and still more preferably 1 mass% or less of the content of the SWCNTs.

The resin composition is preferably substantially free of MWCNTs. The phrase "substantially free of MWCNTs" means that, for example, the content of MWCNTs in the resin composition (conductive layer) is 10 mass% or less, preferably 5 mass% or less, more preferably 3 mass% or less, and still more preferably 1 mass% or less of the content of the SWCNTs.

The resin composition (conductive layer) may or may not contain components other than the polyamide resin and SWCNTs. Examples of the components include, but are not limited to, thermoplastic resins other than polyamide resins, fillers, flame retardants, UV absorbers, antioxidants, damping agents, antibacterial agents, insect repellents, deodorants, coloring inhibitors, heat stabilizers, mold release agents, antistatic agents, plasticizers, lubricants, coloring agents, pigments, dyes, foaming agents, antifoaming agents, antiblocking agents, stabilizers, and coupling agents. Only one type, or two or more types of these additives may be contained.

For these details, descriptions in paragraphs [0130] to [0155] of JP 4894982 B can be referred to, the contents of which are incorporated herein by reference.

In the resin composition, contents of the polyamide resin, the SWCNTs, and optionally blended other additives are adjusted so that the total content of the components is 100 mass%. In the resin composition, the total content of the polyamide resin and SWCNTs accounts for preferably 90 mass% or more, preferably 95 mass% or more, and more preferably 98 mass% or more of the resin composition.

Next, a layer structure of the multilayer film of the present embodiments will be described. The multilayer film of the present embodiments includes: a layer (conductive layer) formed from a resin composition containing a polyamide resin and SWCNTs; and at least another layer. Examples of the other layer include a resin layer, an adhesive layer, and a design layer. A preferred example of the other layer is a polyolefin layer. Further, a preferable example of the other layer is an adhesive layer.

In the present embodiments, for example, as illustrated in FIG. 1, a polyolefin layer 1, an adhesive layer 2, and a layer (conductive layer) 3 formed from a resin composition are preferably included in this order. At this time, preferably, the polyolefin layer and the adhesive layer are bonded to each other in the plane direction, and the adhesive layer and the conductive layer are also bonded to each other in the plane direction. The conductive layer is stretchable, and thus can be sufficiently stretched even after the conductive layer and the polyolefin layer are separately produced and bonded to each other via the adhesive layer.

In addition, the multilayer film of the present embodiments may be co-stretched after the polyolefin layer and the conductive layer are co-extruded (further after the adhesive layer is also co-extruded). Details of the method for producing the multilayer film will be described later.

Examples of the layer configuration of the multilayer film of the present embodiments include the following configurations.
Polyolefin layer/adhesive layer/conductive layer
Polyamide layer other than conductive layer/conductive layer
Polyamide layer other than conductive layer/adhesive layer/conductive layer
Polyolefin layer/adhesive layer/barrier layer/adhesive layer/conductive layer
Polyester resin layer/adhesive layer/conductive layer

Examples of the polyamide resin layer other than the conductive layer include a layer containing a polyamide resin and not containing CNTs. Polyamide resins contained in the polyamide resin layer other than the conductive layer are the same as those exemplified as the polyamide resin that can be contained in the conductive layer, and a preferable range thereof is also the same.

The barrier layer is usually a layer containing a barrier resin. Examples of the barrier resin include xylylenediamine-based polyamide resins and ethylene-vinyl alcohol copolymers.

Also, a thickness of the multilayer film of the present embodiments is preferably 15 um or more and more preferably 30 um or more, and preferably 500 um or less and more preferably 300 µm or less. When the thickness is not less than the lower limit, both water vapor barrier properties and oxygen barrier properties tend to further improve. When the thickness is not more than the upper limit, stretching processability improves, and cost reduction can also be expected.

Also, when the conductive layer is stretched, a thickness of the conductive layer after stretching is preferably 5 µm or more, more preferably 10 µm or more, still more preferably 20 µm or more, even more preferably 30 µm or more, and even still more preferably 40 um or more. When the proportion is set to the lower limit value or more, the oxygen barrier properties tend to be further improved. Also, when the conductive layer is stretched, the thickness of the conductive layer after stretching is preferably 200 µm or less, more preferably 150 um or less, still more preferably 100 µm or less, even more preferably 80 µm or less, and even still more preferably 60 µm or less. When the thickness is not more than the upper limit, visibility improves, and cost reduction can also be expected.

Next, the polyolefin layer will be described. The polyolefin layer is a polyolefin-containing layer. The polyolefin is preferably a homopolymer and/or a copolymer of ethylene, propylene, butene, norbornene, or the like, more preferably polyethylene or polypropylene, and still more preferably polyethylene.

A first embodiment of the polyolefin is polyethylene, it is possible to use low density polyethylene (LDPE), linear low density polyethylene (LLDPE), very low density polyethylene (VLDPE), medium density polyethylene (MDPE), high density polyethylene (HDPE), or the like, but low density polyethylene is preferable from the perspective of flexibility.

A second embodiment of the polyolefin is polypropylene, and known polymers such as propylene homopolymers, propylene-ethylene block copolymers, and propylene-ethylene random copolymers can be used. Commercially available products include Bormed RB845MO available from Borealis AG.

A third embodiment of the polyolefin is a ring-opening polymer of norbornene, which is exemplified by those referred to as COP and COC.

The COP is, for example, a polymer in which norbornene is subjected to ring-opening polymerization and hydrogenation. COP is described, for example, in JP H5-317411 A, and is commercially available as ZEONEX (trade name) or ZEONOR (trade name) available from Zeon Corporation, or as Daikyo Resin CZ (trade name) available from Daikyo Seiko, LTD.

Examples of the COC include copolymers made from olefins such as norbornene and ethylene as raw materials, and copolymers made from olefins such as tetracyclododecene and ethylene as raw materials. COC is commercially available as, for example, Apel (trade name), available from Mitsui Chemicals, Inc.

For other polyolefins used in the polyolefin layer, reference can be made to the descriptions in paragraphs [0011] to [0013] of JP 2015/029571 A and the descriptions in paragraphs [0101] to [0103] of JP 2014-068767 A, the contents of which are incorporated into the present specification.

A content of the polyolefin in the polyolefin layer is preferably 70 mass% or more, more preferably 80 mass% or more, still more preferably 90 mass% or more, even more preferably 95 mass% or more, and even still more preferably 99 mass% or more. When the content is not less than the lower limit, the effects of the present invention tend to be more effectively exhibited. The content of the polyolefin in the polyolefin layer may be 100 mass%.

The polyolefin layer may contain only one type, or two or more types of polyolefins. When two or more types are contained, the total amount thereof is preferably in the above range.

The polyolefin layer may contain other components in addition to the polyolefin. Specifically, the polyolefin layer may contain an additive such as an antioxidant, a matting agent, a weathering stabilizer, an UV absorber, a plasticizer, or a flame retardant. An amount of the additive to be blended is appropriately selected within a range of from 0.1 to 10 mass% of the polyolefin layer.

A thickness of the polyolefin layer is preferably 0.5 or more, more preferably 1.0 or more, and still more preferably 1.5 or more when the thickness of the conductive layer is 1. The thickness of the polyolefin layer is preferably 20 or less, more preferably 18 or less, still more preferably 15 or less, even more preferably 13 or less, and even still more preferably 12 or less when the thickness of the conductive layer is 1. When the thickness is in the above range, the effects of the present invention tend to be more effectively exhibited.

Next, the adhesive layer will be described. The adhesive layer is a layer for bonding layers, and, in the present embodiments, is preferably used for bonding the conductive layer and the polyolefin layer.

The adhesive layer preferably contains an adhesive resin.

In the present embodiments, the adhesive resin is preferably an acid-modified polyolefin. The acid-modified polyolefin is preferably a polyolefin acid-modified with a carboxylic acid and/or a derivative thereof, and a polyolefin acid-modified with a carboxylic acid and/or a derivative thereof and further having a polyamide graft-bonded thereto via a functional group introduced into the molecule by the acid modification (also referred to as "polyamide-graft-modified polyolefin").

Preferred examples of a compound capable of acid-modifying a polyolefin include acrylic acid, methacrylic acid, maleic acid, fumaric acid, itaconic acid, crotonic acid, methylmaleic acid, methylfumaric acid, mesaconic acid, citraconic acid, glutaconic acid, cis-4-cyclohexene-1,2-dicarboxylic acid, endobicyclo[2.2.1]-5-heptene-2,3-dicarboxylic acid and metal salts of these carboxylic acids, monomethyl maleate, monomethyl itaconate, methyl acrylate, ethyl acrylate, butyl acrylate, 2-ethylhexyl acrylate, hydroxyethyl acrylate, methyl methacrylate, 2-ethylhexyl methacrylate, hydroxyethyl methacrylate, aminoethyl methacrylate, dimethyl maleate, dimethyl itaconate, maleic anhydride, itaconic anhydride, citraconic anhydride, endobicyclo-[2.2.1]-5-heptene-2, 3-dicarboxylic acid anhydride, maleimide, N-ethylmaleimide, N-butylmaleimide, N-phenylmaleimide, acrylamide, methacrylamide, glycidyl acrylate, glycidyl methacrylate, glycidyl ethacrylate, glycidyl itaconate, and glycidyl citraconate. One of these can be used alone, or two or more thereof can be used in combination. Among these, maleic anhydride is preferable from the perspective of melt-miscibility with other resins.

The polyolefin in the adhesive resin is preferably a homopolymer and/or a copolymer of an α-olefin such as ethylene, propylene or butene.

As the polyethylene, it is possible to use low density polyethylene (LDPE), linear low density polyethylene (LLDPE), very low density polyethylene (VLDPE), medium density polyethylene (MDPE), high density polyethylene (HDPE), or the like.

As the copolymer, a copolymer of at least two of ethylene, propylene and butene, or a copolymer of at least one of ethylene, propylene and butene and a monomer copolymerizable therewith can be used. Examples of the monomer that can be copolymerized with at least one of ethylene, propylene, and butene include α-olefins, styrenes, dienes, cyclic compounds, and oxygen atom-containing compounds. Particularly preferred copolymers include ethylene/butene copolymers and ethylene/propylene copolymers, with ethylene/butene copolymers being preferred among them.

As for the details of the α-olefins, the styrenes, the dienes, the cyclic compounds, and the oxygen atom-containing compounds, reference can be made to the description in paragraph [0044] of WO 2017/094564, the contents of which are incorporated herein by reference.

The copolymer may be any of an alternating copolymer, a random copolymer, and a block copolymer.

The acid-modified polyolefin particularly preferably used in the embodiments include maleic anhydride-modified polyethylene, maleic anhydride-modified α-olefin copolymers such as maleic anhydride-modified ethylene/butene copolymers, and polyolefins graft-modified with aliphatic polyamides, from the perspective of elastic modulus, flexibility, and impact resistance. Among them, maleic anhydride-modified ethylene/butene copolymers are particularly preferably used.

Specific examples of such an adhesive resin include "Admer" (trade name) available from Mitsui Chemicals, Inc. and "Modic" (trade name) available from Mitsubishi Chemical Corporation.

A content of the adhesive resin in the adhesive layer is preferably 70 mass% or more, more preferably 80 mass% or more, still more preferably 90 mass% or more, even more preferably 95 mass% or more, and even still more preferably 99 mass% or more. When the content is not less than the lower limit, adhesiveness tends to further improve. The content of the adhesive resin in the adhesive layer may be 100 mass%.

The adhesive layer may contain only one type, or two or more types of adhesive resins. When two or more types are contained, the total amount thereof is preferably in the above range.

The adhesive layer may contain other components in addition to the adhesive resin. Specifically, the adhesive layer may contain an additive such as an antioxidant, a matting agent, a weathering stabilizer, an UV absorber, a plasticizer, or a flame retardant. An amount of the additive to be blended is appropriately selected within a range of from 0.1 to 10 mass% of the adhesive layer.

A thickness of the adhesive layer is preferably 0.05 or more, more preferably 0.08 or more, still more preferably 0.1 or more, and even more preferably 0.15 or more when the thickness of the conductive layer is 1. The thickness of the adhesive layer is preferably 0.9 or less, more preferably 0.7 or less, and still more preferably 0.5 or less when the thickness of the conductive layer is 1. When the thickness is in the above range, the effects of the present invention tend to be more effectively exhibited.

Next, preferable physical properties or properties of the multilayer film of the present embodiments will be described.

The multilayer film of the present embodiments is preferably a stretched film. By being a stretched film, a multilayer film having higher oxygen barrier properties and excellent strength is obtained. For details of the stretched film, reference can be made to the matters described in the part regarding the method for producing the multilayer film which will be described later.

The multilayer film of the present embodiments is excellent in visibility. Specifically, the multilayer film of the present embodiments has a total light transmittance of preferably more than 40%, and more preferably 55% or more. Such a total light transmittance is achieved by using SWCNTs as the CNTs. An upper limit of the total light transmittance is ideally 100%, but practically 70% or less.

The total light transmittance is measured in accordance with the Examples which will be described later.

The multilayer film of the present embodiments is preferably used as a conductive film or an antistatic film. Specifically, the surface resistivity of the conductive layer is preferably 1.0 × 10¹¹ Ω/sq. or less, and more preferably 1.0 × 10¹⁰ Ω/sq. or less. A lower limit value of the surface resistivity is preferably 1.0 × 10² Ω/sq. or more. In particular, the surface resistivity of the antistatic film is preferably 1.0 × 10⁵ Q/sq. or more, and more preferably from 1.0 × 10⁷ to 1.0 × 10⁹ Ω/sq.

The surface resistivity is measured in accordance with the Examples which will be described later.

The multilayer film of the present embodiments is preferably used as an oxygen barrier film. In the multilayer film of the present embodiments, the oxygen transmission rate of the conductive layer is preferably 20.00 cc/m²·atm·day or less, more preferably 10.00 cc/m²·atm·day or less, still more preferably 5.00 cc/m²·atm·day or less, even more preferably 3.00 cc/m²·atm·day or less, even still more preferably 2.10 cc/m²·atm·day or less, and yet even still more preferably 1.60 cc/m²·atm·day or less. A lower limit is ideally 0.00 cc/m²·atm·day or more, but is practically 0.10 cc/m²·atm·day. Such oxygen barrier properties are achieved by using SWCNTs, sufficiently dispersing SWCNTs in the conductive layer, stretching the conductive layer, selecting the type of polyamide resin, or the like.

Next, the method for producing the multilayer film of the present embodiments will be described.

First, the method for producing a resin composition will be described.

The resin composition can be produced by a known method for producing a thermoplastic resin composition.

As one embodiment of the method for producing a resin composition according to the present embodiments, it is preferable to blend and knead the SWCNTs and optionally blended other components into the polyamide resin. An example of such a resin composition is a pellet.

Specific examples of the method include a method in which the polyamide resin, the SWCNTs, and optionally blended other components are mixed in advance using various mixers such as a tumbler and a Henschel mixer, and then the mixture is melt-kneaded with a mixer such as a Banbury mixer, a roll, a Brabender, a single-screw kneading extruder, a twin-screw kneading extruder, or a kneader.

In the present embodiments, the SWCNTs are preferably derived from master-batched single-walled carbon nanotubes. That is, in the present embodiments, the SWCNTs are preferably blended in a master-batched form.

The thermoplastic resin for master-batching is preferably a polyamide resin, and more preferably the same resin as the polyamide resin having the highest content to be blended in the conductive layer.

A concentration of the thermoplastic resin in a masterbatch is preferably 99.9 mass% or less, preferably 99.5 mass% or less, and preferably 50 mass% or more, more preferably 60 mass% or more, still more preferably 70 mass% or more, and even more preferably 75 mass% or more. When the concentration is not higher than the upper limit and not lower than the lower limit, the dispersibility of the SWCNTs into the thermoplastic resin tends to further improve.

The resin composition may be obtained by adding SWCNTs when synthesizing the polyamide resin. With such a configuration, the SWCNTs can be more effectively dispersed in the polyamide resin. When the SWCNTs are blended when synthesizing the polyamide resin, the obtained SWCNT-containing polyamide resin may be directly used as a resin composition for forming a conductive layer, or the obtained SWCNT-containing polyamide resin may be used as a masterbatch of SWCNTs and further melt-kneaded with the polyamide resin and the like.

That is, examples of the method for producing the multilayer film of the present embodiments include a method including melt-kneading a polyamide resin and master-batched SWCNTs, in which a content of the SWCNTs is 0.05 mass% or more and less than 1.0 mass% in the resin composition.

As the method for producing the multilayer film of the present embodiments, the resin composition also preferably includes producing master-batched SWCNTs by adding SWCNTs during synthesis of the polyamide resin.

Next, the method for producing the multilayer film using the resin composition obtained above will be described.

The multilayer film of the present embodiments can be produced by co-extruding a resin composition containing a polyamide resin and single-walled carbon nanotubes and compositions for forming other layers (for example, a composition for forming an adhesive layer and a composition for forming a polyolefin layer).

In addition, the multilayer film of the present embodiments can also be obtained by separately extruding a resin composition containing a polyamide resin and single-walled carbon nanotubes and a composition for forming another layer (for example, a composition for forming a polyolefin layer) into a film shape, and then bonding the films with an adhesive resin (adhesive layer).

The multilayer film of the present embodiments may be used in an unstretched state, but is preferably a stretched film. The multilayer film of the present embodiments being a stretched film means that a layer (conductive layer) formed from a resin composition containing at least a polyamide resin and single-walled carbon nanotubes is stretched. The conductive layer is stretched, and thus the oxygen barrier properties of the conductive layer tend to further improve. In the multilayer film of the present embodiments, both the conductive layer and the polyolefin layer are preferably stretched.

In the present embodiments, the stretch ratio of the conductive layer in each of the TD and MD directions is preferably 1.5 times or more, and more preferably 1.8 times or more, and may be 2.0 times or more. An upper limit of the stretch ratio is not particularly specified, and is, for example, 9.0 times or less, and further may be 5.0 times or less.

When the multilayer film of the present embodiments is a stretched film, the conductive layer may be stretched and then bonded to another layer such as the polyolefin layer, or a multilayer unstretched film in which the conductive layer and the polyolefin layer are laminated may be stretched. Whether or not the multilayer film is stretched can be confirmed by measuring a refractive index or the like of the multilayer film.

Next, stretching of the unstretched multilayer film or the unstretched single-layer film (conductive layer) will be described in detail. Hereinafter, an unstretched multilayer film and an unstretched single-layer film (conductive layer) are collectively referred to as unstretched film.

In the present embodiments, the unstretched film is preferably preheated before stretching. The preheating temperature is preferably in a range of from 75°C to 150°C, and more preferably in a range of from 80°C to 140°C. By setting the preheating temperature within the above temperature range, a stretched film having less stretching unevenness and excellent mechanical properties can be obtained. The preheating time (time from the start of preheating to stretching) is preferably in a range of from 5 seconds to 60 seconds, more preferably from 7 seconds to 40 seconds, and still more preferably from 10 seconds to 30 seconds. By setting the preheating time to the time defined above, a stretched film having less stretching unevenness and excellent mechanical properties can be obtained.

The stretching of the obtained unstretched film can be performed by, for example, a known industrial method. Examples of a method of biaxially stretching an unstretched film produced by a casting method include a simultaneous biaxial stretching method, a sequential biaxial stretching method, and a tubular stretching method. In the simultaneous biaxial stretching method, an unstretched film is stretched longitudinally and laterally at the same time by a tenter-type simultaneous biaxial stretching machine. In the sequential biaxial stretching method, an unstretched film melt-extruded from a T-die is stretched in the longitudinal direction by a roll-type stretching machine and then stretched in the transverse direction by a tenter-type stretching machine. In the tubular stretching method, a tubular sheet formed from an annular die is stretched longitudinally and laterally at the same time by gas pressure in an inflation manner. The stretching step may be carried out continuously after the production of the unstretched film, or the unstretched film may be once wound, and stretched as a separate step.

A temperature of a cooling roll is preferably 20°C or higher and 50°C or lower, and more preferably 30°C or higher and 45°C or lower. When the temperature of the cooling roll is lower than 50°C, growth of crystals in the unstretched film can be suppressed. Thus, the visibility of the obtained unstretched film tends to improve. On the other hand, when the temperature of the cooling roll is higher than 20°C, the strength of the film after stretching can be maintained.

A stretching temperature is preferably 30°C or higher and 250°C or lower, and more preferably 50°C or higher and 220°C or lower. When the stretching temperature is 30°C or higher, the breaking frequency in the stretching step can be suppressed. When the stretching temperature is 250°C or lower, the breaking frequency in the stretching step can be suppressed, and, besides, the strength and visibility of the film after stretching can be made excellent.

The film stretched by the above method (stretched film) is desirably subsequently heat-treated. By heat-treating the stretched film, dimensional stability at an ordinary temperature can be imparted to the stretched film. A heat treatment temperature of the stretched film in this case is preferably 100°C or higher and 250°C or lower, and more preferably 150°C or higher and 220°C or lower. When the heat treatment temperature of the stretched film is 100°C or higher, the heat process is sufficient, shrinkage of the stretched film after winding is suppressed, and the dimensional stability is excellent. When the heat treatment temperature of the stretched film is 250°C or lower, the visibility of the stretched film becomes excellent. The heat treatment time may be, for example, from 4 to 60 seconds.

The stretched film which has been sufficiently heat-fixed by a heat treatment operation can be cooled and wound up routinely.

When the stretch ratio and the process conditions are within the above-described ranges, the strength and oxygen barrier properties of the obtained stretched film can be secured, and a stable operation can be realized without breakage of the unstretched film.

Furthermore, in the present embodiments, the multilayer film may be subjected to a surface treatment such as a corona discharge treatment, a plasma treatment, a flame treatment, or an acid treatment in order to enhance printability, laminating properties, and pressure-sensitive adhesive imparting properties. If necessary, the multilayer film may be subjected to the surface treatment as described above, then subjected to a secondary process step such as printing, lamination, adhesive application, or heat sealing, and used for each intended use.

In addition, as for the method for producing the stretched film, reference can be made to the descriptions in paragraphs [0049] to [0053] and FIG. 1 of WO 2017/010390 without departing from the spirit of the present invention, the contents of which are incorporated herein by reference. In addition, as for the multilayer film, reference can be made to the description in paragraph [0054] and FIG. 2 of WO 2017/010390 and the descriptions in paragraphs [0040] to [0045] of WO 2018/083962 without departing from the spirit of the present invention, the contents of which are incorporated herein by reference.

The multilayer film of the present embodiments is widely used in applications including components for transportation devices, such as automobiles; general mechanical components; precision mechanical components; electronic and electrical equipment components; OA equipment components; building materials and housing-related components; medical devices; leisure sporting goods; amusement goods; medical products; daily necessities, such as food packaging films; and defense and aerospace products.

The multilayer film of the present embodiments is preferably used as a packaging material or a container. Examples of the packaging material or container of the present invention include those for foods, medical uses, cosmetics, and electronic parts.

In particular, the multilayer film of the present embodiments has antistatic performance and can suppress generation of static electricity, and thus is preferably used as an antistatic film. Specifically, it can be utilized as a storage bag for grains or the like, a packaging material for containing electronic parts which are destroyed by the generation of static electricity, and a packaging material which can be kept clean because dust hardly adheres to the inside of the bag by suppressing the charging of static electricity.

When the multilayer film of the present embodiments is used as a packaging material or a container, an inner layer is preferably a conductive layer, and an innermost layer is more preferably a conductive layer.

### Examples

The present invention will be described more specifically with reference to examples below. Materials, amounts used, proportions, processing details, processing procedures, and the like described in the following examples can be appropriately changed as long as they do not depart from the spirit of the present invention. Thus, the scope of the present invention is not limited to the specific examples described below.

If a measuring device used in the examples is not readily available due to discontinuation or the like, another device with equivalent performance can be used for measurement.

### <Raw material for conductive layer>

MXD6: polyamide resin synthesized from metaxylylenediamine and adipic acid, S6007, available from Mitsubishi Gas Chemical Company, Inc.
PA6: polyamide 6, 1022B, available from Ube Industries, Ltd.
SWCNT: single-walled carbon nanotube, SG101, available from Zeon Corporation
MWCNT: multi-walled carbon nanotube, Graphistrength, available from Arkema S.A.

### <Raw material for adhesive layer>

Modic: adhesive resin obtained by introducing maleic acid anhydride group into polyolefin, M533, available from Mitsubishi Chemical Corporation

### <Raw material for outer layer>

PE: polyethylene resin, UF240, available from Japan Polyethylene Corporation

### <Adjustment of masterbatch MB-1>

Into a reaction vessel having a volume of about 3 L and equipped with a stirrer, a nitrogen gas inlet, and a condensed water outlet, 730.8 g of adipic acid, 0.6322 g of sodium hypophosphite monohydrate, and 0.4404 g of sodium acetate were charged, the interior of the vessel was sufficiently purged with nitrogen, and then the mixture was melted at 170°C while supplying nitrogen gas at 20 mL/min. While gradually raising the temperature to 250°C, a diamine obtained by mixing 681.0 g of metaxylylenediamine (MXDA) (available from Mitsubishi Gas Chemical Company, Inc.) and 14.1 g of SWCNTs was added dropwise to the mixture, and polymerization was performed for about 2 hours to obtain a conductive resin masterbatch (SWCNT content: 1.0 mass%). The obtained polyamide had a relative viscosity (ηr) of 2.2 and a melting point (Tm) of 237.4°C.

### <Adjustment of masterbatch MB-2>

SWCNTs were dry-blended with MXD6 (available from Mitsubishi Gas Chemical Company, Inc., product number: S6007) at a mass ratio of 99:1, and then the mixture was fed from the screw root of a twin-screw extruder (available from Shibaura Machine Co., Ltd., TEM26SS) using a twin-screw cassette threading feeder (available from Kubota Corporation, CE-W-1-MP), and melt-kneaded to obtain a conductive resin masterbatch MB-2 (MXD6/SWCNT content: 1.0 mass%). The temperature of the extruder was set to 260°C.

### <Adjustment of masterbatch MB-3>

SWCNTs were dry-blended with PA6 (available from Ube Industries, Ltd., product number: 1022B) at a mass ratio of 99:1, and then the mixture was fed from the screw root of a twin-screw extruder (available from Shibaura Machine Co., Ltd., TEM26SS) using a twin-screw cassette threading feeder (available from Kubota Corporation, CE-W-1-MP), and melt-kneaded to obtain a conductive resin masterbatch MB-3 (PA6/SWCNT content: 1.0 mass%). The temperature of the extruder was set to 260°C.

### <Adjustment of masterbatch MB-4>

MWCNTs were dry-blended with MXD6 (available from Mitsubishi Gas Chemical Company, Inc., product number: S6007) at a mass ratio of 80:20, and then the mixture was fed from the screw root of a twin-screw extruder (available from Shibaura Machine Co., Ltd., TEM26SS) using a twin-screw cassette threading feeder (available from Kubota Corporation, CE-W-1-MP), and melt-kneaded to obtain a conductive resin masterbatch MB-4 (MXD6/MWCNT content: 20 mass%). The temperature of the extruder was set to 270°C.

### <Adjustment of masterbatch MB-5>

MWCNTs were dry-blended with PA6 (available from Ube Industries, Ltd., product number: 1022B) at a mass ratio of 80:20, and then the mixture was fed from the screw root of a twin-screw extruder (available from Shibaura Machine Co., Ltd., TEM26SS) using a twin-screw cassette threading feeder (available from Kubota Corporation, CE-W-1-MP), and melt-kneaded to obtain a conductive resin masterbatch MB-5 (PA6/MWCNT content: 20 mass%). The temperature of the extruder was set to 260°C.

### Examples 1 to 7, Comparative Examples 1 to 4, and Reference Examples 1 and 2

### <Production of resin composition for forming conductive layer>

In Examples 1 to 7 and Comparative Examples 1 to 4, a resin composition for forming a conductive layer (pellet) was produced according to the following method.

The components were weighed and dry-blended so as to attain the compositions indicated in Table 1 or 2 below, and then the mixture was fed from the screw root of a twin-screw extruder (available from Shibaura Machine Co., Ltd., TEM26SS) using a twin-screw cassette weighing feeder (available from Kubota Corporation, CE-W-1-MP), and melt-kneaded to obtain a resin composition pellet. The temperature of the extruder was set to 260°C when MXD6 was used as the polyamide resin, and 260°C when PA6 was used as the polyamide resin.

In Tables 1 and 2, the amount of CNTs added is not the amount of MB added but the amount of CNTs blended into the resin composition for forming a conductive layer.

### <Production of (unstretched) multilayer film>

An unstretched multilayer film composed of conductive layer/adhesive layer/outer layer (polyolefin layer) was formed using the obtained resin compositions for forming a conductive layer (polyamide resins indicated in Table 2 for Reference Examples 1 and 2), an adhesive resin as a raw material for the adhesive layer, and a polyethylene resin as a raw material for the outer layer, by means of a multilayer film molding machine equipped with three extruders, at an extrusion temperature of the conductive layer of 260°C, an extrusion temperature of the adhesive layer of 240°C, an extrusion temperature of the outer layer of 240°C, a flow path temperature after lamination of 260°C, and a cooling roll temperature of 80°C.

### <Production of stretched multilayer film>

Then, the unstretched multilayer film obtained above was stretched at 130°C in each of the MD and TD directions, so as to attain a stretch ratio of 2 times × 2 times, using a biaxial stretching device (tenter method, EX105S, available from Toyo Seiki Seisaku-sho, Ltd.), and then the stretched film was relaxed to a relaxation rate of 3% while being heat-fixed (heat fixation temperature: 160°C, heat fixation time: 15 sec) to obtain a stretched multilayer film.
The thickness of each of the layers indicated in Tables 1 and 2 is the thickness after stretching.

### <Tensile modulus of elasticity and tensile strength>

A strip having a width of 10 mm was cut out from the conductive layer of the unstretched multilayer film obtained above, and the tensile modulus of elasticity (unit: GPa) and tensile strength (unit: MPa) were measured at a test speed of 50 mm/min in accordance with JIS K 7127. At the time of measurement, a tensile test of the unstretched multilayer film in the MD direction was performed, and the distance between chucks was set to 50 mm, and the tensile speed was set to 50 mm/min. The measurement environment was in an atmosphere at 23°C and a relative humidity (RH) of 50%.

### <Evaluation of electrical conductivity (antistatic properties)>

The surface resistivity of the conductive layer of the unstretched multilayer film obtained above was measured.

At the time of measurement, Hiresta-UX (MCP-HT800) available from Nittoseiko Analytech Co., Ltd. was used.

The smaller the surface resistivity, the more excellent the electrical conductivity. In addition, when the surface resistivity is 1.0 × 10¹⁰ Ω/sq. or less, the antistatic properties are excellent.

### <Total light transmittance>

For the obtained unstretched multilayer film, the total light transmittance was measured, and evaluated as follows.

The spectral color/haze meter COH7700 available from Nippon Denshoku Industries Co., Ltd. was used for the measurement.
A: Total light transmittance of 55% or more
B: Total light transmittance of more than 40% and less than 55%
C: Total light transmittance of 40% or less

### <Aggregate amount>

The surface of the conductive layer of the stretched multilayer film obtained above was observed with an optical microscope, and the size of the convex portion was measured. The height of the convex portion was observed and measured by using a non-contact three dimensional shape measuring device available from MITAKA KOHKI Co., Ltd. A composition in which the number of convex portions having a height of 5 um or more and a longitudinal length of 20 um or more present at a surface thereof was 2 or less per mm² of surface area was evaluated as acceptable, and a composition in which the number of convex portions was more than 2 was evaluated as unacceptable. In the measurement, five regions per mm² of surface area were arbitrarily selected and averaged (when the average value is a decimal, the first decimal place was rounded off).

### <Stretchability>

Stretchability during stretching in the production of the unstretched multilayer film was evaluated as follows.
A: Stretching was performed without trouble.
B: Stretching was possible, but there were some cases where unevenness in thickness occurred even under the same stretching conditions.
C: Film was cut during stretching.

### <Oxygen transmission rate>

For the obtained stretched multilayer film, the oxygen transmission rate was evaluated as follows.

For the conductive layer of the stretched multilayer film, oxygen transmission rate (OTR, unit: cc/m²·atm·day) was measured in an atmosphere at 23°C and a relative humidity (RH) of 60% by the isopiestic method. The pressure of the oxygen atmosphere was set to 1 atm, and the measurement time was 24 hours (1 day).

The oxygen transmission rate (OTR) was measured using an oxygen transmission rate measuring device (product name: "OX-TRAN (trade name) 2/21", available from MOCON Inc.).

**[Table 1]**

| | | | Example 1 | Example 2 | Example 3 | Example 4 | Example 5 | Example 6 | Example 7 |
|---|---|---|---|---|---|---|---|---|---|
| Conductive layer | Polyamide resin type | | MXD6 | MXD6 | MXD6 | MXD6 | MXD6 | PA6 | PA6 |
| | Added amount | mass% | 99.8 | 99.7 | 99.8 | 99.7 | 99.5 | 99.8 | 99.7 |
| | CNT type | | SWCNT | SWCNT | SWCNT | SWCNT | SWCNT | SWCNT | SWCNT |
| | Added amount | mass% | 0.2 | 0.3 | 0.2 | 0.3 | 0.5 | 0.2 | 0.3 |
| | MB type of CNT | | MB-1 | MB-1 | MB-2 | MB-2 | MB-2 | MB-3 | MB-3 |
| | Conductive layer thickness | µm | 50 | 50 | 50 | 50 | 30 | 50 | 50 |
| Adhesive layer | Adhesive resin type | | Modic | Modic | Modic | Modic | Modic | Modic | Modic |
| | Thickness | µm | 10 | 10 | 10 | 10 | 10 | 10 | 10 |
| Outer layer | Resin type | | PE | PE | PE | PE | PE | PE | PE |
| | Thickness | µm | 50 | 50 | 50 | 50 | 70 | 50 | 50 |
| Evaluation | Tensile modulus of elasticity | GPa | 1.89 | 2.03 | 1.86 | 1.98 | 1.78 | 1.00 | 1.07 |
| | Tensile strength | MPa | 60 | 64 | 58 | 62 | 48 | 37 | 42 |
| | Electrical conductivity evaluation | Ω/sq. | 1.8 × 10⁹ | 2.2 × 10⁷ | 9.3 × 10⁹ | 1.1 × 10⁸ | 3.5 × 10⁴ | 1.1 × 10¹⁰ | 4.1 × 10⁸ |
| | Total light transmittance | | A | B | A | B | B | B | B |
| | Aggregate amount | | Acceptable | Acceptable | Acceptable | Acceptable | Acceptable | Acceptable | Acceptable |
| | Stretchability | | A | A | A | A | B | A | A |
| | Oxygen transmission rate | cc/m²·atm·day | 1.61 | 1.54 | 1.65 | 1.59 | 2.54 | 18.00 | 17.10 |

**[Table 2]**

| | | | Comparative Example 1 | Comparative Example 2 | Comparative Example 3 | Comparative Example 4 | Reference Example 1 | Reference Example 2 |
|---|---|---|---|---|---|---|---|---|
| Conductive layer | Polyamide resin type | | MXD6 | MXD6 | MXD6 | PA6 | MXD6 | PA6 |
| | Added amount | mass% | 99.8 | 99.7 | 97.0 | 99.7 | 100.0 | 100.0 |
| | CNT type | | MWCNT | MWCNT | MWCNT | MWCNT | - | - |
| | Added amount | mass% | 0.2 | 0.3 | 3.0 | 0.3 | - | - |
| | MB type of CNT | | MB-4 | MB-4 | MB-4 | MB-5 | - | - |
| | Conductive layer thickness | µm | 50 | 50 | 50 | 50 | 50 | 50 |
| Adhesive layer | Adhesive resin type | | Modic | Modic | Modic | Modic | Modic | Modic |
| | Thickness | µm | 10 | 10 | 10 | 10 | 10 | 10 |
| Outer layer | Resin type | | PE | PE | PE | PE | PE | PE |
| | Thickness | µm | 50 | 50 | 50 | 50 | 50 | 50 |
| Evaluation | Tensile modulus of elasticity | GPa | 1.72 | 1.72 | 1.95 | 0.95 | 1.70 | 0.93 |
| | Tensile strength | MPa | 53 | 54 | 61 | 34 | 52 | 33 |
| | Electrical conductivity evaluation | Ω/sq. | ≥ 10¹³ | ≥ 10¹³ | 8.3 × 10⁸ | ≥ 10¹³ | ≥ 10¹³ | ≥ 10¹³ |
| | Total light transmittance | | A | A | C | A | B | B |
| | Aggregate amount | | Unacceptable | Unacceptable | Unacceptable | Unacceptable | - | - |
| | Stretchability | | C | C | C | | A | A |
| | Oxygen transmission rate | cc/m²·atm·day | 1.75 | 1.71 | 1.51 | 18.90 | 1.85 | 19.80 |

As is clear from the above results, the multilayer film of the present invention had antistatic properties, was excellent in visibility, and could be stretched. The multilayer film also excelled in oxygen barrier properties. It also excelled in mechanical strength.

### Reference Signs List

1. Polyolefin layer
2. Adhesive layer
3. Conductive layer

## Claims

1. A multilayer film comprising: a layer formed from a resin composition comprising a polyamide resin and single-walled carbon nanotubes; and at least another layer.

2. The multilayer film according to claim 1, wherein the polyamide resin comprises a semi-aromatic polyamide resin.

3. The multilayer film according to claim 1, wherein the polyamide resin comprises a diamine-derived structural unit and a dicarboxylic acid-derived structural unit, 70 mol% or more of the diamine-derived structural unit being derived from a xylylenediamine.

4. The multilayer film according to claim 3, wherein 70 mol% or more of the dicarboxylic acid-derived structural unit is derived from an α,ω-linear aliphatic dicarboxylic acid having from 4 to 9 carbon atoms.

5. The multilayer film according to claim 3 or 4, wherein 70 mol% or more of the xylylenediamine is metaxylylenediamine.

6. The multilayer film according to any one of claims 1 to 5, wherein a single-walled carbon nanotube content in the resin composition is 0.05 mass% or more and less than 1.0 mass%.

7. The multilayer film according to any one of claims 1 to 5, wherein a single-walled carbon nanotube content in the resin composition is 0.05 mass% or more and 0.7 mass% or less.

8. The multilayer film according to any one of claims 1 to 7, wherein the single-walled carbon nanotubes are derived from master-batched single-walled carbon nanotubes.

9. The multilayer film according to any one of claims 1 to 7, wherein the resin composition comprises a resin composition obtained by adding single-walled carbon nanotubes when synthesizing a polyamide resin.

10. The multilayer film according to any one of claims 1 to 9, wherein a total light transmittance of the multilayer film is more than 40%.

11. The multilayer film according to any one of claims 1 to 10, wherein the other layer comprises a polyolefin layer.

12. The multilayer film according to claim 11, wherein the other layer comprises an adhesive layer, and the multilayer film comprises the polyolefin layer, the adhesive layer, and the layer formed from the resin composition in this order.

13. The multilayer film according to any one of claims 1 to 12, which is a stretched film.

14. A method for producing a multilayer film described in any one of claims 1 to 8 and 10 to 13, the method comprising melt-kneading a polyamide resin and master-batched single-walled carbon nanotubes, wherein a single-walled carbon nanotube content is 0.05 mass% or more and less than 1.0 mass% in the resin composition.

15. A method for producing a multilayer film described in any one of claims 1 to 7 and 9 to 13, the method comprising adding single-walled carbon nanotubes during synthesis of the polyamide resin.
